# EUROPEAN PATENT SPECIFICATION

(11) **EP 2 156 083 B1**
(45) Date of publication and mention of the grant of the patent: **08.07.2015**
(21) Application number: 08766708.5
(22) Date of filing: 26.05.2008
(51) Int. Cl.: F16L 3/133, F16L 3/24, F16L 3/11

(54) **CLAMP FOR SUSPENDING A PIPE**
SCHELLE FÜR DIE AUFHÄNGUNG EINES ROHRES
BRIDE POUR LA SUSPENSION D'UN CONDUIT

(30) Priority: 24.05.2007 NL 1033884
(43) Date of publication of application: 24.02.2010
(73) Proprietor: J. van Walraven Holding B.V., 3641 RK Mijdrecht (NL)
(72) Inventor: VAN WALRAVEN, Jan, NL-3641 GP Mijdrecht (NL)
(74) Representative: EP&C
(86) International application number: PCT/NL2008/000135
(87) International publication number: WO 2008/143501

(56) References cited:
- WO-A-2005/054735
- JP-A- 10 160 046
- JP-A- 11 230 418

## Description

The invention relates to a clamp for a pipe or the like, to be attached to a profile, wherein the clamp comprises a mainly ring-shaped clamp body for receiving the pipe, and furthermore a suspension part enclosing the used profile at least partially in order to suspend the clamp body from the profile.

Such clamps are used for suspending drain pipes. Drain pipes are suspended with these types of clamps from a profile, because mounting the drain pipe directly to a support surface (a ceiling for instance) by means of clamps, will lead to excessive vibrations of the pipe with respect to the support surface.

A clamp according to the preamble, is known from EP 1 411 286. The known clamp has a ring-shaped clamp body for receiving the pipe and a mainly U-shaped suspension part with legs extending around a socket profile. One end part of the clamp body of the familiar clamp is integrally connected to one of the legs of the suspension part. Another end part of the clamp body can be connected to the suspension part through a bolt lip at one leg of the suspension part which is engageable with an opening in the end of the clamp body. The legs of the suspension part are provided with lips which are bent in order to engage with the underside of the profile, so that the legs are fixed with respect to the profile. In this way, the familiar clamp aims to avoid a complex assembly and particularly the need to tighten screw connections.

JP 11 230418 discloses a pipe clamp with a ring-shaped clamp body and a separate suspension part. The suspension part can be suspended from a threaded rod with a nut mounted on the suspension part. The clamp boddy is attached to the suspension by a bolt and nut assembly.

The current invention aims to provide an alternative clamp of the type referred to in the preamble.

According to the invention, this objective is achieved by means of a clamp according to claim 1. The clamp according to the invention comprises a clamp body and a suspension part that are produced as two separate parts that are connected to each other during use.

The fact that the suspension part and the clamp body are produced as separate parts, offers the opportunity to manufacture the suspension part as a universal part that can be combined with various clamp bodies that are suitable for receiving pipes with various diameters. As a result, the suspension part can be manufactured in larger series, which will offer economic advantage.

Furthermore, the separate production of clamp body and suspension part, will also offer the opportunity to make them from different materials. This is an advantage, because the part that has to withstand the least load, in practice usually the clamp body, can be made of a lighter maternal.

The invention relates to a clamp for a pipe or the like, to be attached to a profile, wherein the clamp comprises a mainly ring-shaped clamp body for receiving the pipe, and furthermore a suspension part enclosing the used profile at least partially in order to suspend the clamp body from the profile.

Such clamps are used for suspending drain pipes. Drain pipes are suspended with these types of clamps from a profile, because mounting the drain pipe directly to a support surface (a ceiling for instance) by means of clamps, will lead to excessive vibrations of the pipe with respect to the support surface.

A clamp according to the preamble, is known from EP 1 411 286. The known clamp has a ring-shaped clamp body for receiving the pipe and a mainly U-shaped suspension part with legs extending around a socket profile. One end part of the clamp body of the familiar clamp is integrally connected to one of the legs of the suspension part. Another end part of the clamp body can be connected to the suspension part through a bolt lip at one leg of the suspension part which is engageable with an opening in the end of the clamp body. The legs of the suspension part are provided with lips which are bent in order to engage with the underside of the profile, so that the legs are fixed with respect to the profile. In this way, the familiar clamp aims to avoid a complex assembly and particularly the need to tighten screw connections.

The current invention aims to provide an alternative clamp of the type referred to in the preamble.

According to the invention, this objective is achieved by means of a clamp according to claim 1. The clamp according to the invention is characterized in that the clamp body and the suspension part are produced as two separate parts that are connected to each other during use.

The fact that the suspension part and the clamp body are produced as separate parts, offers the opportunity to manufacture the suspension part as a universal part that can be combined with various clamp bodies that are suitable for receiving pipes with various diameters. As a result, the suspension part can be manufactured in larger series, which will offer economic advantage.

Furthermore, the separate production of clamp body and suspension part, will also offer the opportunity to make them from different materials. This is an advantage, because the part that has to withstand the least load, in practice usually the clamp body, can be made of a lighter material.

In a preferred embodiment, in each leg of the suspension part holes are made opposite of each other and in each end part of the clamp body holes are made opposite each other, wherein the holes in the respective legs of the suspension part and the holes in the respective end parts of the clamp body are aligned, and a fixing element, preferably a screw or a bolt, is running through these holes in order to lock the legs and the end parts with respect to the profile.

A possible embodiment offers the possibility to clamp the legs of the suspension part and, if applicable, the end parts of the clamp body against the profile.

Clamping the suspension part and with that the complete clamp to the profile can be important in order to prevent movements of the clamp as much as possible, movements which could be caused by stresses on the pipe while discharging water. From the prior art, for instance EP 274 760, clamps are known wherein a gib is used in order to clamp the suspension part against the profile. In IP 1 411 286 bent lips are used for this that engage under the profile. These solutions according to the prior art require a high dimensional accuracy when manufacturing the clamp. In case of the clamp according to the invention, this high dimensional accuracy is not required, if a screw or bolt / nut connection is used, because further tightening of the bolt or screw will allow you to get a clamping strength with the required force. This leads to a more simple production.

The invention will be further explained hereafter, based on the preferred embodiment of the invention, under reference to the drawing, in which:
Fig. 1 shows a preferred embodiment of a clamp according to the invention.
Fig. 2-4 illustrate the connection of a suspension part and a clamp half of a clamp body of the clamp shown in Fig. 1, and
Fig. 5 shows the clamp from Fig. 1 in an opened position,
Fig. 6 shows the clamp from Fig. 1 while it is being attached around a profile by its suspension part
Fig. 7 shows the clamp from Fig. 6 suspending from the profile while it is being closed, and
Fig. 8 shows the clamp from Fig. 6 suspending from the profile in its closed position, while a screw is inserted in order to clamp the suspension part against the profile.

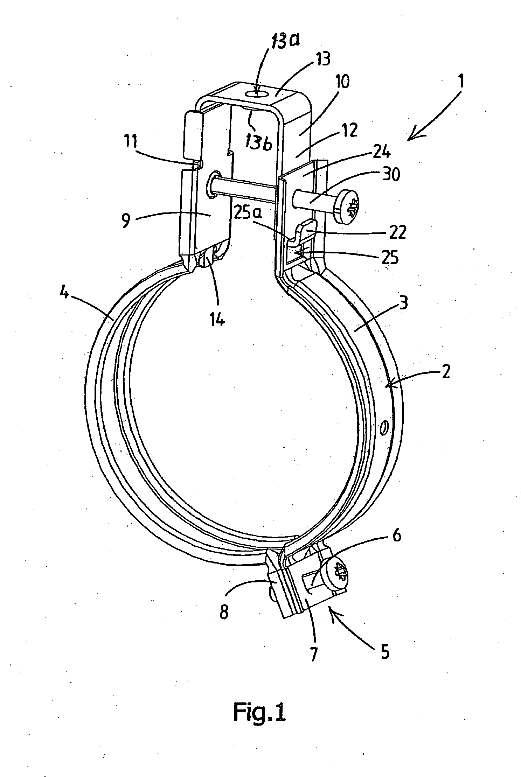

In Fig. 1, 5-8, a clamp 1 according to the invention is shown, which is arranged to be attached to a profile for suspending a pipe. The clamp 1 has a ring-shaped clamp body 2 comprising two clamp halves 3 and 4, respectively. The clamp body is preferably made from a steel strip or strip material from another type of metal. The clamp halves 3 and 4, respectively, are connected to each other through hinging means 5. In the illustrated preferred embodiment, at one end of each of the clamp halves 3 and 4, respectively, the hinging means 5 comprise a flange 7 respectively 8 with a hole through which a screw 6 is running. As a skilled person will understand, the hinge construction shown here is only one of the many hinge constructions that are possible in a clamp according to the current invention.

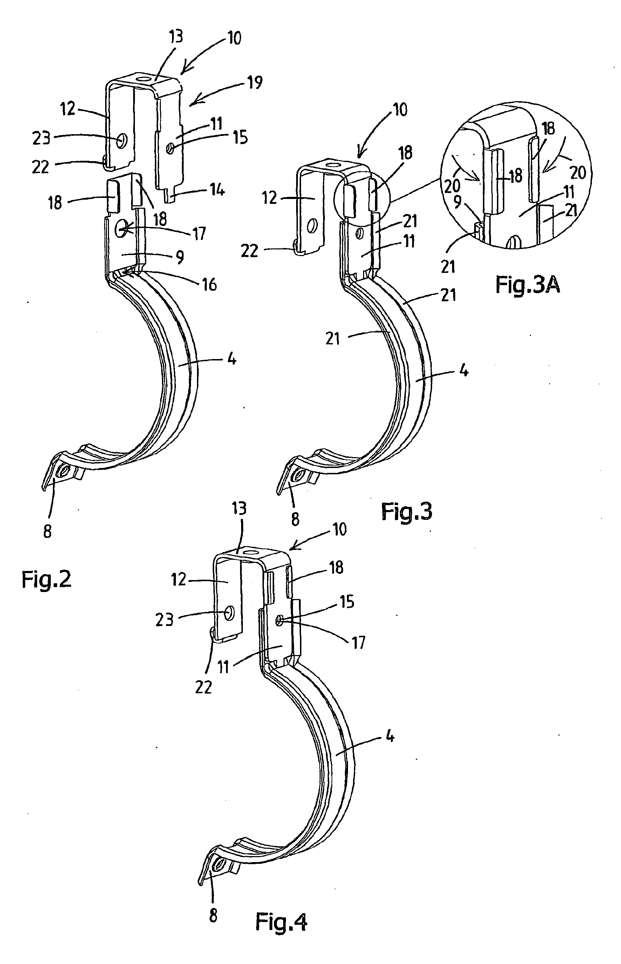

The clamp 1 also comprises a separately made suspension part 10 that is connected to the clamp body 2. Fig. 2 shows the suspension part 10 together with the clamp half 4 in an as yet uncoupled situation. The suspension part 10 is made as a mainly U-shaped clamp and in the example shown has two substantially parallel legs 11 and 12 and a connection piece 13 that connects the two legs 11, 12. The legs 11, 12 and the connection piece 13 are made out of one piece, preferably a steel strip or another type of metal. In practice, this strip can have a thickness of, for example, 3 mm. In the preferred embodiment, the material of the clamp body 2 is thinner than the material of the suspension part 10.

At the free end of one of the legs 11 of the suspension part 10 a positioning protrusion 14 is provided. The leg 11 is furthermore provided with a hole 15 for inserting a screw 30 or the like. At the end of clamp half 4, facing a way from flange 8, there is an end part attached as a flange 9. The flange 9 is provided with a hole 17 for inserting the abovementioned screw 30 or the like. At the transition between the flange 9 and the bent part of the clamp half 4, a positioning recess 16 is made for receiving the positioning protrusion 14. During assembly, the leg is placed against the flange 9 and the positioning protrusion 14 is inserted in the positioning recess 16. In this situation, the holes 15 or 17 in the leg 11 or the flange 9 are in line, so that a screw 30 or the like can be run through it. The hole 17 in the flange 9 is preferably provided with an internal thread in order to cooperate with an external thread on a screw 30 or the like.

At the flange 9 of the clamp half 4 a lip 18 is made at each of the sides, which, in an unassembled situation (see Fig. 2), extends mainly perpendicular with respect to the surface of the flange 9. In the opposing edges of the leg 11, recesses 19 are made with a length that mainly corresponds with the lips 18, so that the lips 18, when they extend along the flange, can fall into the recesses, as a result of which the flange 9 and the leg 11 are fixed with respect to each other in the longitudinal direction of the leg. Next, the lips 18 are bent around the edges of the leg, at the height of the recesses 19, as shown in Fig 3a by the arrows 20, so that the flange 9 and the leg 11 are fixed with respect to each other.

The flange 9 and the bent part of the clamp half are provided with a raised edge 21, which contributes to the rigidity of the clamp half 4. It is also possible that reinforcement ribs or the like ilar are made in the clamp halves 3, 4.

The other leg 12 of the suspension element 10 is provided at its end with a hook member 22. Furthermore, the leg 12 is provided with a hole 23 that is in line with the hole 15 in the other leg 11. The clamp half 3 has an end part formed as flange 24. In the flange 24 a hook opening 25 is arranged, through which the hook device 22 can be inserted in order to then hook behind the upper edge 25a of the hook opening 25. The flange 24 is furthermore provided with a hole 26 for inserting a screw 30 or the like.

The suspension part 10 and the clamp half 4 are preferably pre-assembled, i.e. already attached to each other when supplied to the installer. The attachment can (partly) take place by means of a machine in the factory where the parts are manufactured. The clamp halves 3 and 4 can also be supplied to the installer pre-assembled, but can also be supplied separately so that the installer will have to attach the clamp halves to each other, in the shown example he will do this by coupling flanges 7 and 8 by inserting and tightening the screw 6.

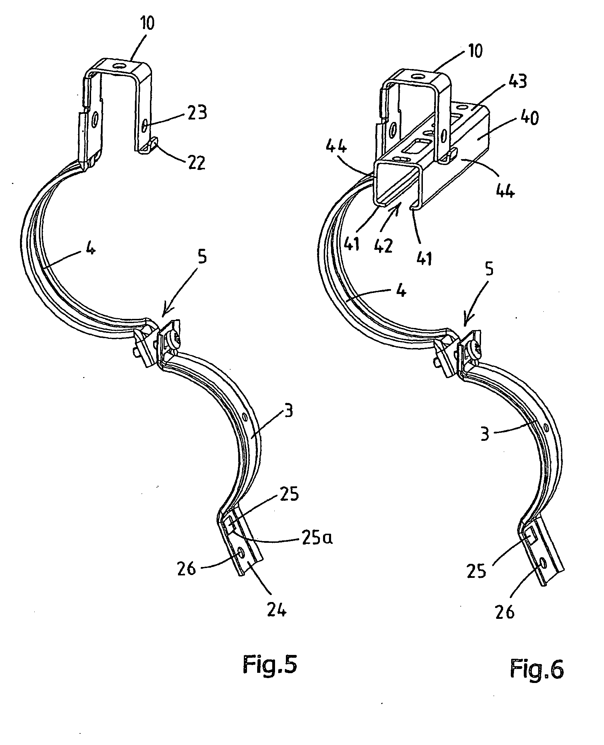

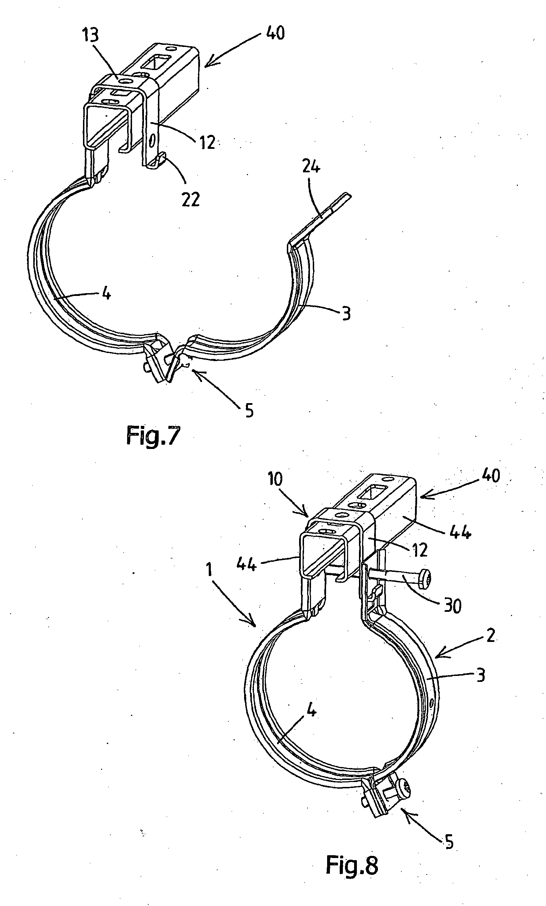

When the clamp half 4 is connected to the suspension part and the clamp halves 3 and 4 are connected to each other, the clamp 1 is ready for use. This situation is shown in Fig. 5, wherein the clamp is open. Next, the suspension part 10 can be attached over a profile 40 as illustrated in Fig. 6 and 7. This concerns a C-profile with a bottom 43, side walls 44 and flanges 41 extending towards each other from the side walls and confining a longitudinal slot 42. The bottom 43 can be provided with assembly holes that can be used to attach the profile 40 to a support part or support surface. Such a C-profile is an assembly means that is often used in the installation industry and it can be attached to a support surface such as a ceiling in a familiar way, for instance through threaded rods or other assembly means. Other profile forms are also possible of course without taking anything away from the soundness of the invention, e.g. profiles with a square, rectangular or round diameter.

The suspension part 10 surrounds three sides of the profile 40, wherein the connection part 13 of the suspension element 10 will be adjacent to the bottom 43 of the profile and the legs 11, 12 of the suspension element 10 lie along the side walls 44 of the profile 40 as you can see in Fig. 7. Next, a pipe (not shown) can be inserted in the opened clamp body 2. As the hinging means 5 are not directly under the centre line of the pipe, as a result of which the circle arch of the clamp half 4 attached to the suspension means 10 is longer than the circle arch of the other clamp half 3, the pipe - when being installed - will be laid in the clamp half 4, after which the clamp half 3 will be hinged close (Fig. 7). The hook connection between the hook opening 25 and the hook member 22 is established, so that the clamp 1 is in a temporary assembly condition. The holes 15, 17, 23 and 26 are now in line, so that the screw 30 can be inserted. The screw 30 is screwed in the screw hole 17 in the flange 9 and tightened. As a result the leg 12 of the suspension element 10 and the flange 24 of the clamp half 3 are fixed with respect to each other. The profile is locked between the legs 11, 12 and the connection piece 13 of the suspension part 10 and the screw 30.

Furthermore, by tightening the screw 30, the legs 11, 12 of the suspension part 10 can be clamped against the side walls 44 of the profile 40, so that the clamp 1 is securely attached to the profile 40.

In the shown embodiment, the connection piece 13 of the suspension part 10 is provided with a hole 13a for inserting a male attachment element such as a threaded rod or a bolt. With this, instead of suspending the clamp from the profile 40, it can also be suspended from a threaded end (a bolt or something similar), which will then, for example, be attached to the profile 40. The hole 13a could be provided with internal thread in order to work together with an external thread of a threaded end, bolt or the like.

As can be seen in the figures, the hole 13a in the connection piece 13 of the suspension part 10 is continued, i.e. there is an edge 13b protruding from hole 13a in the direction of the clamp body. This edge can be used to position the suspension part 10 in the holes in the bottom of the profile. When accepted in the smaller holes in the bottom of the profile 40, the edge 13b is fixed in longitudinal direction of the profile 40. In the larger holes, elongated in longitudinal direction, in the bottom of the profile 40 (see Fig. 7 and 8) the edge 13b is received while still movable in the longitudinal direction of the profile 40. In an assembled condition, the suspension part 10, if required, can be fixed to the profile 40 by clamping the legs 11, 12 of the suspension part 10 against the side walls 44 of the profile 40.

## Claims

1. A clamp (1) for a pipe or the like, to be attached in use to a profile (40), wherein the clamp (1) comprises a mainly ring-shaped clamp body (2) for receiving the pipe, and further a suspension part (10) that in use at least partially encloses the profile to suspend the clamp body (2) from the profile (40), wherein the clamp body (2) and the suspension part (10) are two separate parts that are connected with each other when in use, **characterized in that** the suspension part (10) has legs (11, 12) that, when in use, extend along the sides (44) of the profile (40), wherein the clamp body (2) has an end part (9) that is provided with attachment means (16, 17, 18) that will firmly attach one of the legs (11) of the suspension part (10) to the clamp body (2), and wherein the attachment means comprise one or more fixing lips (18) that can be folded around the leg (11) of the suspension part (10) or are folded in order to fix said leg (11) of the suspension part (10) to said end part (9) of the clamp body (2).

2. Clamp according to claim 1, wherein the suspension part (10) is adapted such that it is complementary to the part of the profile (40) it encloses.

3. Clamp according to claim 1, wherein the suspension part is made of a mainly U-shaped clamp with legs (11, 12) that are connected by a connection piece (13).

4. Clamp according to claim 1, wherein the end part (9) of the clamp body (2) is provided at its sides with recesses where the fixing lips (18) engage with.

5. Clamp according to one of the previous claims, wherein the leg (11), that is arranged to be firmly attached to the clamp body (2), is provided with a positioning protrusion (14), and wherein said end part (9) of the clamp body (2) is provided with an opening (16) for receiving the positioning protrusion (14).

6. Clamp according to one of the previous claims, wherein one of the legs (12) of the suspension part (10) and an end part (24) of the clamp body (2) are provided with hook means (22, 26) in order to hook said end part (24) of the clamp body (2) to said leg (12).

7. Clamp according to one of the previous claims, wherein in each of the legs (11, 12) of the suspension part (10) opposite holes (15, 23) are arranged for running through a fixing element (30).

8. Clamp according to one of the previous claims, wherein in the end parts (9, 24) of the clamp body (2) opposite holes (17, 26) are arranged for running through a fixing element (30).

9. Clamp according to claims 7 and 8, wherein the holes (15, 23) in the respective legs (11, 12) of the suspension part (10) and the holes (17, 26) in the respective end parts (9, 24) of the clamp body (2) are positioned in line and a fixing element (30) is running through the aforementioned holes (17, 26, 15, 23).

10. Clamp according to one of the preceding claims, having one or more of the following features:
- the clamp body (2) comprises two clamp halves (3, 4) that are hingeably connected to each other through hinging means;
- the suspension part (10) is made out of a metal, preferably steel, strip;
- the clamp body (2) is made out of a metal, preferably steel, strip;
- the clamp body (2) and the suspension part (10) are made of metal, preferably steel, strips with different thicknesses;
- the suspension part (10) and the clamp body (2) are made out of different materials.

11. Clamp according to claim 3, wherein a hole (13a) is provided in the connection piece (13) of the suspension part (10), in order to run through a male fixing element, wherein, preferably, the connection piece (13) of the suspension part (10) is provided with a perimeter edge (13b), which protrudes with respect to the side of the connection piece (13) that is facing the clamp body.

12. Fixing system for suspending a pipe or the like, comprising a profile (40) and a clamp (1) according to one of the preceding claims.

## Patentansprüche

1. Klemme (1) für ein Rohr oder dergleichen, die im Gebrauch an einem Profil (40) anzubringen ist, wobei die Klemme (1) einen hauptsächlich ringförmigen Klemmenkörper (2) zur Aufnahme des Rohrs und darüber hinaus ein Aufhängeteil (10) aufweist, das im Gebrauch das Profil zumindest teilweise umschließt, um den Klemmenkörper (2) am Profil (40) aufzuhängen, wobei der Klemmenkörper (2) und das Aufhängeteil (10) zwei separate Teile sind, die im Gebrauch miteinander verbunden sind, **dadurch gekennzeichnet, dass** das Aufhängeteil (10) Schenkel (11, 12) hat, die sich, wenn sie in Gebrauch sind, entlang der Seiten (44) des Profils (40) erstrecken, wobei der Klemmenkörper (2) ein Endteil (9) hat, das mit Anbringungseinrichtungen (16, 17, 18) versehen ist, die einen der Schenkel (11) des Aufhängeteils (10) fest am Klemmenkörper (2) anbringen werden, und wobei die Anbringungseinrichtungen eine oder mehrere Fixierungslippe/n (18) aufweisen, die um den Schenkel (11) des Aufhängeteils (10) herum gebogen werden kann bzw. können oder gebogen ist bzw. sind, um den Schenkel (11) des Aufhängeteils (10) am Endteil (9) des Klemmenkörpers (2) zu fixieren.

2. Klemme nach Anspruch 1, wobei das Aufhängeteil (10) so angepasst ist, dass es zu dem Teil des Profils (40) komplementär ist, den es umschließt.

3. Klemme nach Anspruch 1, wobei das Aufhängeteil aus einer hauptsächlich U-förmigen Klemme mit Schenkeln (11, 12) besteht, die durch ein Verbindungsstück (13) verbunden sind.

4. Klemme nach Anspruch 1, wobei das Endteil (9) des Klemmenkörpers (2) an seinen Seiten mit Ausnehmungen versehen ist, mit denen die Fixierungslippen (18) in Eingriff gelangen.

5. Klemme nach einem der vorhergehenden Ansprüche, wobei der Schenkel (11), der fest am Klemmenkörper (2) angebracht angeordnet ist, mit einem Positionierungsvorsprung (14) versehen ist, und wobei das Endteil (9) des Klemmenkörpers mit einer Öffnung (16) zur Aufnahme des Positionierungsvorsprungs (14) versehen ist.

6. Klemme nach einem der vorhergehenden Ansprüche, wobei einer der Schenkel (12) des Aufhängeteils (10) und ein Endteil (24) des Klemmenkörpers (2) mit Hakeneinrichtungen (22, 26) versehen sind, um das Endteil (24) des Klemmenkörpers (2) am Schenkel (12) einzuhaken.

7. Klemme nach einem der vorhergehenden Ansprüche, wobei in jedem der Schenkel (11, 12) des Aufhängeteils (10) gegenüberliegende Öffnungen (15, 23) angeordnet sind, um ein Fixierungselement (30) hindurchtreten zu lassen.

8. Klemme nach einem der vorhergehenden Ansprüche, wobei in den Endteilen (9, 24) des Klemmenkörpers (2) gegenüberliegende Öffnungen (17, 26) angeordnet sind, um ein Fixierungselement (30) hindurchtreten zu lassen.

9. Klemme nach den Ansprüchen 7 und 8, wobei die Öffnungen (15, 23) in den jeweiligen Schenkeln (11, 12) des Aufhängeteils (10) und die Öffnungen (17, 26) in den jeweiligen Endteilen (9, 24) des Klemmenkörpers (2) übereinstimmend angeordnet sind und ein Fixierungselement (30) durch die zuvor erwähnten Öffnungen (17, 26, 15, 23) hindurchtritt.

10. Klemme nach einem der vorhergehenden Ansprüche, die eines oder mehrere der folgenden Merkmale aufweist:
- der Klemmenkörper (2) hat zwei Klemmenhälften, die durch Anlenkeinrichtungen aneinander angelenkt sind;
- das Aufhängeteil (10) besteht aus einem Metall-, vorzugsweise Stahlband;
- der Klemmenkörper (2) besteht aus einem Metall-, vorzugsweise Stahlband;
- der Klemmenkörper (2) und das Aufhängeteil (10) bestehen aus Metall-, vorzugsweise Stahlbändern mit unterschiedlichen Dicken;
- das Aufhängeteil (10) und der Klemmenkörper (2) bestehen aus unterschiedlichen Materialien.

11. Klemme nach Anspruch 3, wobei eine Öffnung (13a) im Verbindungsstück (13) des Aufhängeteils (10) vorgesehen ist, um ein Einsteckbefestigungselement hindurchtreten zu lassen, wobei das Verbindungsstück (13) des Aufhängeteils (10) vorzugsweise mit einem Umfangsrand (13b) versehen ist, der in Bezug auf die Seite des Verbindungsstücks (13) vorsteht, die dem Klemmenkörper zugewandt ist.

12. Befestigungssystem zum Aufhängen eines Rohrs oder dergleichen, ein Profil (40) und eine Klemme (1) nach einem der vorhergehenden Ansprüche umfassend.

## Revendications

1. Bride de serrage (1) pour un tuyau ou analogues, destinée à être reliée, durant l'utilisation, à un profilé (40), dans laquelle la bride de serrage (1) comprend un corps de bride de serrage de forme principalement annulaire (2) pour recevoir le tuyau, et en outre une partie de suspension (10) qui, durant l'utilisation, enferme au moins partiellement le profilé pour suspendre le corps de bride de serrage (2) à partir du profilé (40), dans laquelle le corps de bride de serrage (2) et la partie de suspension (10) sont deux parties séparées qui sont raccordées l'une à l'autre durant l'utilisation, **caractérisée en ce que** la partie de suspension (10) comporte des segments (11, 12) qui, durant l'utilisation, s'étendent le long des côtés (44) du profilé (40), dans laquelle le corps de bride de serrage (2) comporte une partie d'extrémité (9) qui est pourvue de moyens de liaison (16, 17, 18) qui lieront fermement un des segments (11) de la partie de suspension (10) au corps de bride de serrage (2), et dans laquelle les moyens de liaison comprennent une ou plusieurs lèvres de fixation (18) qui peuvent être pliées autour du segment (11) de la partie de suspension (10) ou sont pliées afin de fixer ledit segment (11) de la partie de suspension (10) à ladite partie d'extrémité (9) du corps de bride de serrage (2).

2. Bride de serrage selon la revendication 1, dans laquelle la partie de suspension (10) est adaptée de sorte qu'elle soit complémentaire à la partie du profilé (40) qu'elle enferme.

3. Bride de serrage selon la revendication 1, dans laquelle la partie de suspension est faite d'une bride de serrage principalement en forme de U avec des segments (11, 12) qui sont raccordés par une pièce de raccordement (13).

4. Bride de serrage selon la revendication 1, dans laquelle la partie d'extrémité (9) du corps de bride de serrage (2) est pourvue, sur ses côtés, d'évidements avec lesquels les lèvres de fixation (18) entrent en prise.

5. Bride de serrage selon une des revendications précédentes, dans laquelle le segment (11), qui est agencé pour être fermement relié au corps de bride de serrage (2), est pourvu d'une protubérance de positionnement (14), et dans laquelle ladite partie d'extrémité (9) du corps de bride de serrage (2) est pourvue d'une ouverture (16) pour recevoir la protubérance de positionnement (14).

6. Bride de serrage selon une des revendications précédentes, dans laquelle un des segments (12) de la partie de suspension (10) et une partie d'extrémité (24) du corps de bride de serrage (2) sont pourvus de moyens à crochet (22, 26) afin d'accrocher ladite partie d'extrémité (24) du corps de bride de serrage (2) audit segment (12).

7. Bride de serrage selon une des revendications précédentes, dans laquelle, dans chacun des segments (11, 12) de la partie de suspension (10), des trous opposés (15, 23) sont agencés pour traverser un élément de fixation (30).

8. Bride de serrage selon une des revendications précédentes, dans laquelle, dans la partie d'extrémités (9, 24) du corps de bride de serrage (2), des trous opposés (17, 26) sont agencés pour traverser un élément de fixation (30).

9. Bride de serrage selon les revendications 7 et 8, dans laquelle les trous (15, 23) dans les segments respectifs (11, 12) de la partie de suspension (10) et les trous (17, 26) dans les parties d'extrémité respectives (9, 24) du corps de bride de serrage (2) sont positionnés en ligne et un élément de fixation (30) passe à travers les trous susmentionnés (17, 26, 15, 23).

10. Bride de serrage selon une des revendications précédentes, possédant une ou plusieurs des caractéristiques suivantes :
- le corps de bride de serrage (2) comprend deux moitiés de bride de serrage (3, 4) qui sont raccordées de façon articulée l'une à l'autre par l'intermédiaire de moyens d'articulation ;
- la partie de suspension (10) est faite d'une bande métallique, de préférence d'acier ;
- le corps de bride de serrage (2) est fait d'une bande métallique, de préférence d'acier ;
- le corps de bride de serrage (2) et la partie de suspension (10) sont faits de bandes métalliques, de préférence d'acier, avec différentes épaisseurs ;
- la partie de suspension (10) et le corps de bride de serrage (2) sont faits de différents matériaux.

11. Bride de serrage selon la revendication 3, dans laquelle un trou (13a) est prévu dans la pièce de raccordement (13) de la partie de suspension (10), afin de traverser un élément de fixation mâle, dans laquelle, de préférence, la pièce de raccordement (13) de la partie de suspension (10) est pourvue d'un bord périmétrique (13b), qui fait saillie par rapport au côté de la pièce de raccordement (13) qui fait face au corps de bride de serrage.

12. Système de fixation pour suspendre un tuyau ou analogues, comprenant un profilé (40) et une bride de serrage (1) selon une des revendications précédentes.
